# EUROPEAN PATENT SPECIFICATION

(11) **EP 0 491 662 B1**
(45) Date of publication and mention of the grant of the patent: **15.05.1996**
(21) Application number: 91810976.0
(22) Date of filing: 13.12.1991
(51) Int. Cl.: G02F 1/1335, G02B 6/08

(54) **Liquid crystal display having diverging/magnifying faceplate**
Flüssigkristall-Anzeige mit divergierender/vergrössernder Frontplatte
Afficheur à cristal liquide avec plaque frontale divergente/grossissante

(30) Priority: 17.12.1990 US 628104
(43) Date of publication of application: 24.06.1992
(73) Proprietor: OIS Optical Imaging Systems, Inc., Troy, Michigan 48084 (US)
(72) Inventor: Abileah, Adiel, Farmington Hills, Michigan (US)
(74) Representative: Kügele, Bernhard

(56) References cited:
- EP-A- 0 179 913
- SID INT. SYMPOSIUM DIGEST OF TECHN. PAPERS May 1985, pages 58-61; H. MATSUKAWA et al.: 'A Continuous Very-Large-Area Liquid-Crystal Color Display'
- 1978 INT. OPTICAL COMPUTING CONFERENCE September 1978, LONDON, GB, pages 106-109; P. SOLTAN : 'Liquid-crystal fiber-optics light modulator for optical information display'
- PATENT ABSTRACTS OF JAPAN vol. 14, no. 185 (P-1036) 13 April 1990 ; & JP-A-2 033 186

## Description

### FIELD OF THE INVENTION

The instant invention relates generally to the field of electronic two dimensional liquid crystal displays, which displays are adapted to provide either still or video images to a remotely positioned viewing audience. The instant invention more particularly relates to the field of backlit liquid crystal displays which are specially designed to present a bright, uniform distribution of light, over a relatively large area, to said viewing audience in a low profile, i.e., minimum depth dimension assembly. The unique and improved display disclosed in the instant specification finds an important use in large area, full color active matrix liquid crystal displays.

### BACKGROUND OF THE INVENTION

In recent years, a considerable amount of research has been conducted in an effort to develop a low profile (thin), full color, electronic display system which does not rely upon conventional cathode ray tube technology. In systems such as television receivers, computer monitors, avionic displays, aerospace displays, and other military-related displays, the elimination of cathode ray tube technology is desirable for several reasons, which reasons will be detailed in the following paragraphs.

More particularly, cathode ray tubes (CRT's) are typically characterized by extremely large depth dimensions and thus occupy a considerable amount of floor or counter space. As a matter of fact, the depth dimension may equal the length and width dimensions of the viewing screen. Also, because cathode ray tubes require an elongated neck portion to provide for the acceleration of an electron beam from the electron gun to the faceplate of the cathode ray tube, they are quite irregular in shape. Additionally, since cathode ray tubes are fabricated from relatively thick glass, they are inordinately heavy, extremely fragile and readily breakable. Finally, cathode ray tubes require a relatively high voltage power supply in order to sufficiently accelerate the electron beam and thus sustain the displayed image.

The reader can readily appreciate the fact that all of the foregoing problems experienced with or shortcomings of cathode ray tubes are exascerbated as the size of the viewing screen increases. Since the current trend, and in fact consumer demand, is toward larger screens; weight, breakability, placement, etc. represent significant commercial considerations. Accordingly, it should be apparent that cathode ray tubes are and will continue to be inappropriate for use in those applications in which weight, fragility and portability are important factors.

One system which can eliminate all of the aforementioned shortcomings of the present day cathode ray tube is the flat panel liquid crystal display in which a matrix array of liquid crystal picture elements or pixels are arranged in a plurality of rows and columns. Liquid crystal displays (LCD's) may typically be either reflective, transflective or transmissive. A reflective display is one which depends upon ambient light conditions in order to be viewed, i.e., light from the surrounding environment incident upon the side of the display facing the viewer is reflected back to the viewer. Differences in the orientation of the liquid crystal material housed within each liquid crystal pixel causes those pixels to appear either darkened or transparent. In this manner, a pattern of information is defined by the two dimensional matrix array of darkened (or transparent) pixels. However, and as should by now be apparent, reflective liquid crystal displays cannot be used in a dark or low light environment since there is insufficient light available for reflection off the viewing surface of the display.

Conversely, transmissive liquid crystal displays require the use of illuminating means such as a lamp array operatively disposed on the side of the matrix array of picture elements opposite the viewer. This illumination means or backlight may further include a backreflector adapted to efficiently redirect any stray illumination towards the matrix array of rows and columns of picture elements, thus ensuring that the displayed image is as bright as possible (given the lighting capabilities and characteristics of the backlighting scheme being employed). Transflective displays are displays which can operate in either the transmissive or reflective modes. The instant invention is specifically directed to the field of backlit, high resolution liquid crystal electronic displays.

While CRT's are characterized by the numerous problems detailed hereinabove, they do possess the advantage of being relatively easy to fabricate, even in relatively large area sizes, such as for example, 24" diameters or more. Conversely, large area liquid crystal displays are much more costly and difficult to fabricate since, at the present time, manufacturing yields for LCD's decrease as display sizes increase.

Accordingly, considerable effort has been made to fabricate large area LCD's by disposing a number of smaller area displays in side-by-side relationship. This approach, also known as "tiling" has met with some success. However, the primary limitation to this approach has been the fact that adjacent displays do not provide adjacent images as there is a gap of up to 12mm or more between each display owing to the necessary presence of interconnection regions for achieving electrical communication with related driving electronics.

Heretofore, the surrounding interconnection region caused the appearance of a "grid" within the tiled display, which has proven to be a significant limitation to the utility of this approach. Attempts to resolve this problem have focussed on the use of a fibre optic faceplate as the upper plate of the liquid crystal display. This approach creates significant problems in the manufacture and quality of LCD's so fabricated. These problems relate to: I)the need to use glass fibre optic faceplates (due to the high processing temperatures encountered in the fabrication process) which adds significantly to the weight of the display; 2) the increased complexity of the fabrication process (resulting from irregularities and inconsistancies in the deposition surface of the fibre optic faceplate) resulting in lower manufacturing yields and therefore higher costs per display; and 3) potential for contamination of the liquid crystal material through the faceplate.

A method involving tiling together two or more displays, while eliminating the grid area surrounding each display is known from EP-A-179.913 which discloses an improved backlit electronic display and specifically a liquid crystal display adapted to provided an image to one or more remotely positioned observers. The improved liquid crystal display is defined by a matrix array of rows and columns of liquid crystal picture elements (pixels) operatively spaced from a light source. The improvement in this display resides in the incorporation therein of an angled, diverging/magnifying faceplate, operatively disposed immediately adjacent the second or upper plate of an LCD, on the side of the matrix array of rows and columns opposite the light source.

The angular, diverging/magnifying faceplate shifts and enlarges the image provided by the display, thus making it possible to "hide" the appearance of the electronic connection region arranged around the periphery of the display. This improvement finds particular utility in applications wherein two or more displays are butted together, or "tiled" so as to make a single large area display. The use of an angular, diverging/magnifying faceplate allows for the projected image to be enlarged and shifted so as to hide the seam or grid created by the displays' surrounding electronic connection regions. Specifically, the images projected by the two or more displays are shifted so as that the images appear to be immediately adjacent one another. In this way, a single large area, uniform, bright image is projected without the deleterious effect of interference from the grid region.

In practice, the faceplate is a fibre optic faceplate which is a coherent faceplate of bundled optical fibres wherein each individual fibre has a relatively small numerical apperature, so as to reduce loss of resolution. Since the fibre optic faceplate is not immediately adjacent the liquid crystal pixels, (i.e., it is spaced from the pixel by the width dimension of the second or upper plate of the LCD) large numerical apertured optical fibres cause a significant loss of resolution because they would collect light from many liquid crystal pixels, and thus transmit a less focussed image. Accordingly, a small numerical apertured optical fibre is employed so that light is collected from a single pixel only. However, using a small numerical apertured fibre optic results in a small viewing cone, i.e., a narrow viewing angle for the remotely positioned viewer. Use of a diffusing plate is also mentioned in EP-A- 179 913

The problem of angular viewing dependency as a limitation of reflective liquid crystal is known from the document 1978 INT. OPTICAL COMPUTING CONFERENCE, September 1978, LONDON, GB, page 106-109 which discloses a fiber optic image expander for an LC panel, tapered conical fibers and fanned out cylindrical fibres.

By this it is meant that the quality of projected image is seriously degraded when viewed at angles other than about ninety degrees to the surface of the faceplate.

According to the present invention, a backlit liquid crystal display is as claimed in claim 1.

There is disclosed herein an improved display which includes means adapted to increase the viewing angle of the display to the remotely positioned viewer. More particularly, it is a characteristic of the low numerical aperatured, coherent, divergent/magnifying fibre optic faceplate that light is not projected in all directions from the surface of the faceplate. Indeed, it is impossible to view the projected image at any angle besides normal to the surface of the display. Accordingly, the display of the present invention includes a second fibre optic faceplate disposed atop the first faceplate. This second fibre optic faceplate possesses a relatively high numerical aperture so as to diffuse the projected light thereby making it visible at a much larger viewing angle.

The display also includes a back reflector which is operatively disposed on the side of the light source opposite the matrix array of pixels. In one embodiment, the light source is configured as a single, elongated, serpentined, tubular lamp arranged in a series of elongated parallel lobes. In a second, equally preferred embodiment, the light source may be configured as a plurality of discrete tubular lamps, said lamps defining a given lighting configuration.

It must be emphasized that the improved display arrangement of the instant invention will operate with equal effectiveness in passive displays as well as in active matrix electronic displays. It is to be further noted that while the instant invention has been described with respect to diverging/magnifying fibre optic faceplates, other optic devices may be employed with equal sucess. By way of examples and not limitation, the parameters appropriate for the fibre optic faceplate will work equally well with a plastic faceplates.

In the liquid crystal displays described herein, each picture element will include a pair of electrodes having liquid crystal material operatively disposed therebetween and at least one threshold device. The threshold devices may either be diodes or field effect transistors. Where two threshold devices are employed, they are electrically coupled together at a common node in non-opposing series relationship. The threshold devices preferably comprise diodes formed from deposited thin film layers of amorphous silicon alloy material of p-i-n construction.

These and other objects and advantages of the instant invention will become apparent to the reader from a perusal of the Detailed Description Of The Invention, the Drawings and the Claims, all of which follow immediately hereinafter.

### BRIEF DESCRIPTION OF THE DRAWINGS

Figure 1 is an exploded perspective view illustrating the component elements typically present in a liquid crystal display;
Figure 2 is a stylistic front elevational view of the matrix array of rows and columns of liquid crystal picture elements of the active matrix embodiment of the electronic display of the instant invention schematically illustrating the manner in which the threshold switching elements are operatively disposed between the address lines and one of the picture element electrodes;
Figure 3 is an equivalent circuit diagram, as disposed in the active matrix embodiment of the array of Figure 2, illustrating the relationship between the liquid crystal picture elements and the anode-to-cathode connected diodes by which individual ones of the picture elements schematically depicted in Figure 2 are addressed;
Figure 4 is a partial cross-sectional side view illustrating three adjacent liquid crystal displays and the disposition of the diverging/magnifying fibre optic faceplate relative to the surface of the liquid crystal display and the light source;
Figure 5 is a blown-up partial cross-sectional side view of the area defined by block 5 of Figure 4; and
Figure 6 is cross-sectional side view of the liquid crystal display and diverging/magnifying fibre optic faceplate of the instant invention, further including a second fibre optic faceplate operatively disposed for increasing the viewing angle of the image projected by the display.

### DETAILED DESCRIPTION OF THE INVENTION

Disclosed as part of the instant invention is an improved faceplate assembly for an electronic display, such as a liquid crystal display and most specifically, by way of example and not by way of limitation, to an active matrix liquid crystal display for military and avionic applications. Active matrix liquid crystal displays, which operate in full color and in the transmissive mode, represent the primary choice of flat panel technologies for avionic and military apllications because of its sunlight readability, high resolution, color and gray scale capability, low power consumption and thin profile. It is to be specifically noted that while an active matrix liquid crystal display will be described in detail hereinafter as a preferred embodiment, the instant invention can be used with equal advantage in any type of backlit electronic display known to routineers in the art. With the foregoing objectives clearly in mind, the improved liquid crystal display with fibre optic faeplate will be described in greater detail in the following paragraphs.

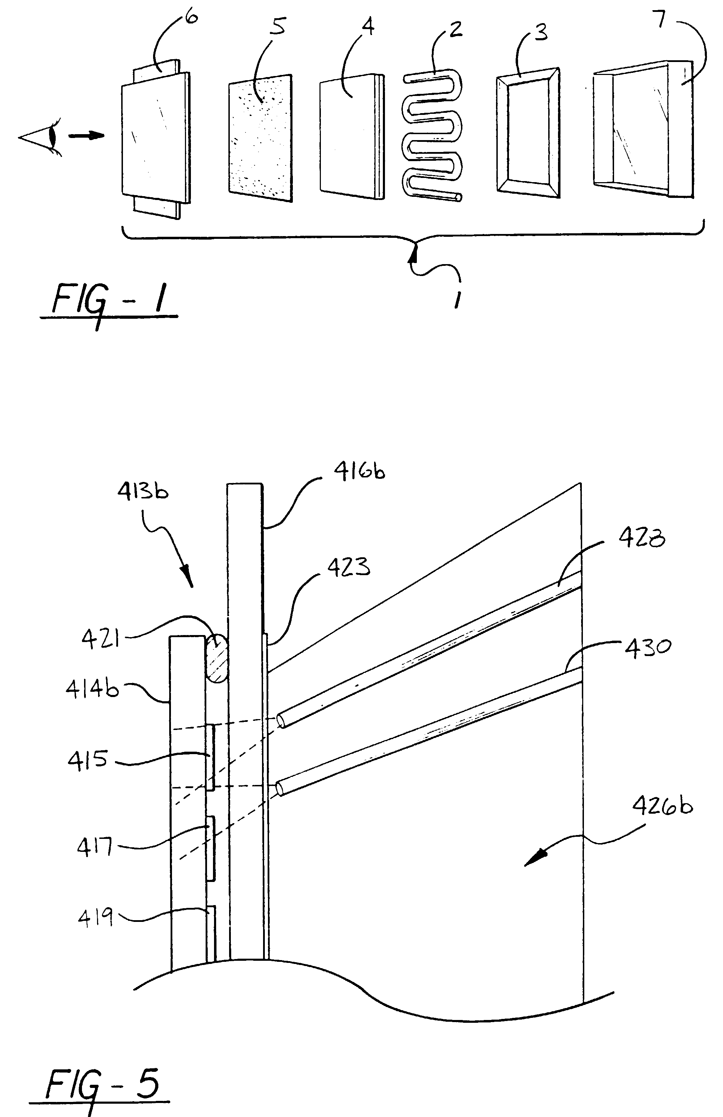

An exploded perspective view of a fluorescent lamp-based backlight and liquid crystal display assembly is illustrated in Figure 1. The assembly depicted therein is represented generally by the reference numeral 1 and, as is typical in the industry, employs a tubular fluorescent lamp 2 as the light source. Of course, the lamp 2 may be arranged in any one of a plurality of well known configurations: it may be serpentined as shown in Figure 1, alternatively the lamp may be "U-Shaped", circular or straight.

Returning now to Figure 1, the typical display and backlight assembly further includes a back reflector 3, and a diffuser 5. Of course, disposed in front of the backlight system 1 is a display element comprising a plurality of rows and columns of liquid crystal picture elements adapted to be illuminated by said backlight system. The purpose of the back reflector 3 is to redirect light which is not initially directed towards the display element so that the maximum amount of light available from a given light source is directed towards the display.

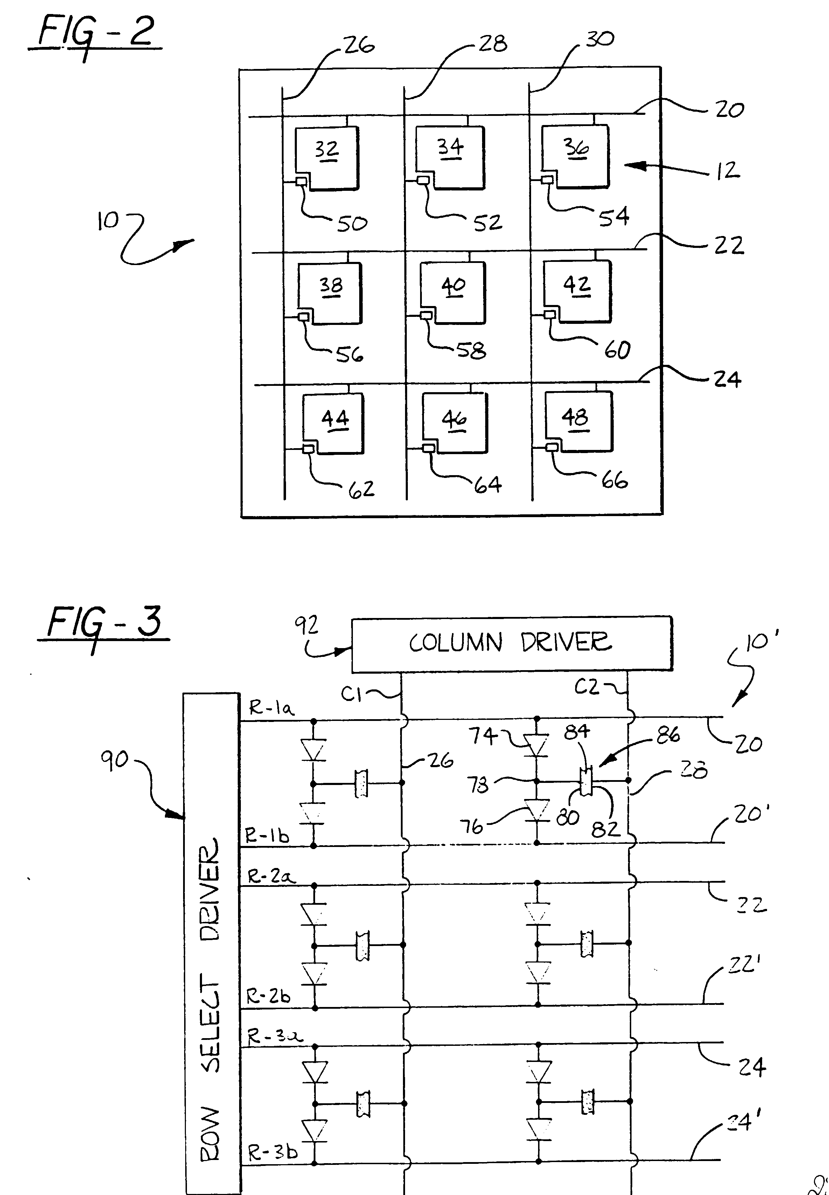

Referring now to Figure 2, there is depicted therein a matrix array of rows and columns of discrete liquid crystal picture elements, said matrix array being generally designated by the reference numeral 10. Each liquid crystal display picture element, or pixel, 12 includes two spacedly disposed pixel electrode plates with a light influencing material, such as a liquid crystal composition, operatively disposed therebetween. (The electrode plates and the light influencing material will be discussed in detail with respect to Figure 3.) Each of the pixels 12 further includes a threshold switching device or a plurality of threshold switching devices for selectively applying an electric field across the liquid crystal composition when the electric field exceeds a predetermined threshold value.

More specifically, the matrix array 10 which defines the liquid crystal display of the instant invention includes a first set of X address lines 20, 22 and 24; a second set of Y address lines 26, 28 and 30; and a plurality liquid crystal picture elements 32, 34, 36, 38, 40, 42, 44, 46 and 48. The display further includes at least one isolation or addressing element 50, 52, 54, 56, 58, 60, 62, 64 and 66 operatively associated with and electrically connected to each respective one of the picture elements. As should be readily apparent to the reader from even a cursory review of Figure 1, the X address lines 20, 22 and 24 and the Y address lines 26, 28 and 30 cross over one another at an angle so as to define a plurality of spaced crossover points associated with respective ones of the liquid crystal picture elements 32-48. The picture elements are formed on a transparent substrate, such as glass, and are distributed thereover in spacedly disposed relation so as to define interstitial spaces therebetween.

As can be ascertained from a perusal of Figures 2 and 3, each of the threshold devices 50-66 is preferably coupled in non-opposing series relation with a first one of the pixel electrodes. This type of switching arrangement will now be described in greater detail with respect to Figure 3. In Figure 3, the matrix array 10′ includes a plurality of substantially parallel address line pairs 20, 20′, 22, 22′, 24 and 24′ which are the row select lines and a plurality of substantially parallel column address lines 26 and 28. The column address lines 26, 28, and 30 cross the row select address line pairs at an angle and are spaced from the row select address line pairs to form a plurality of crossover points therewith. Preferably, the column address lines cross the row select line pairs at an angle which is substantialy perpendicular thereto.

Since, as mentioned hereinabove, each of the pixels are identical, only pixel 12 will be described in detail in the following paragraphs. Pixel 12, as can be seen from the figures, includes a pair of threshold devices 74 and 76 which are electrically coupled together at common node 78. The threshold devices 74 and 76 are preferably diodes and are electrically coupled together in non-opposing series relationship between the row select address line pair 20 and 20′. Although the threshold devices, in accordance with the preferred embodiment of the invention are diodes, said devices can be of any type which provides a high impedance to current flow when reverse biased and a comparatively low impedance to current flow when forward biased. Therefore, any bidirectional threshold switch or field effect transistor can be utilized with equal advantage. Of course, more conventional electrical interconnections would be employed with field effect transistors.

The picture element or pixel 12 further includes a pair of electrode plates 80 and 82 which are spaced apart and facing one another. Operatively disposed in the space between the electrodes 80 and 82 is a light influencing material 84. The term "light influencing material" is defined and will be used herein to include any material which emits light or can be used to selectively vary the intensity, phase, or polarization of light either being reflected from or transmitted through the material. In accordance with the preferred embodiment of the invention, the light influencing material is a liquid crystal display material, such as a nematic liquid crystal material. In any event, the electrodes 80 and 82 with the liquid crystal material 84 disposed therebetween form a storage element 86 (or capacitor) in which electric charge can be stored. As illustrated, the storage element 86 is coupled between the common node 78, formed by the electrically connected diodes 74 and 76, and the column address line 26.

Still referring to Figure 2, the display 10 further includes a row select driver 90 having outputs R-1a, R-1b, R-2a, R-2b, R-3a, and R-3b electrically coupled to the row select line pairs 20, 20′, 22, 22′, 24, and 24′. The row select driver 90 provides drive signals at the outputs thereof to apply first operating potentials which are substantially equal in magnitude and opposite in polarity between the row select address line pairs to forward bias the threshold devices to in turn facilitate the storage of electric charge in the storage elements coupled thereto. The row select driver also applies second operating potentials which are substantially equal in magnitude and opposite in polarity between the row select address line pairs to reverse bias the threshold devices to facilitate the retention of the electric charge stored in the storage elements coupled thereto.

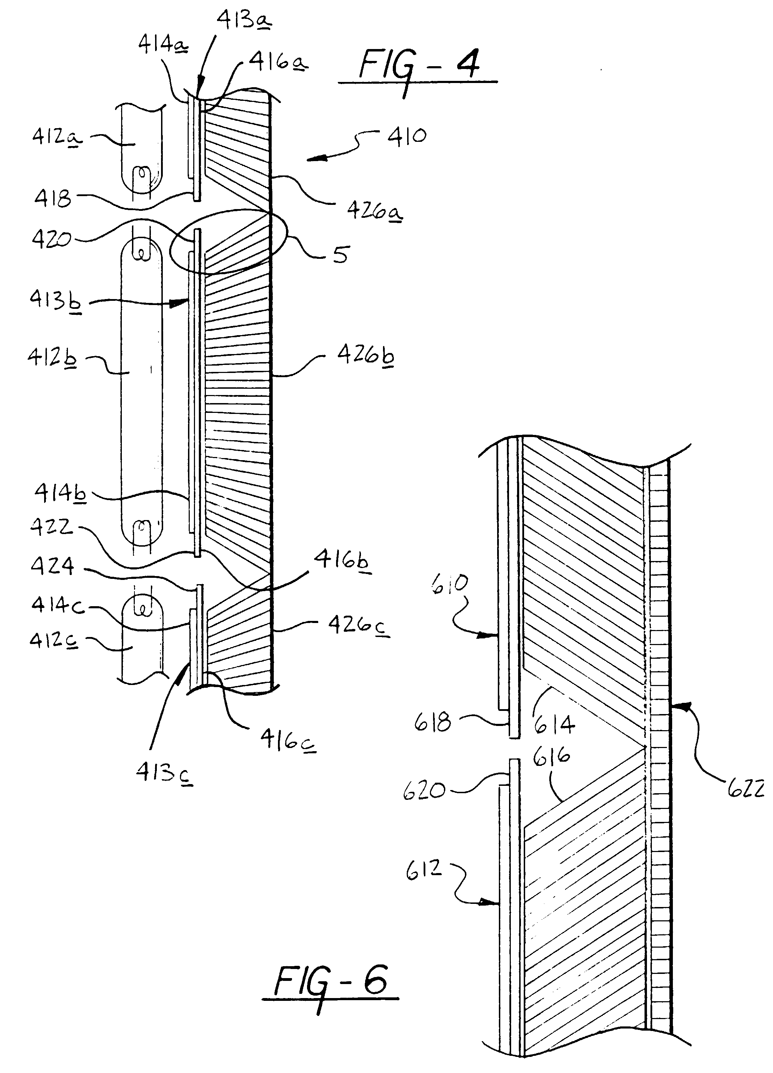

Lastly, the electronic display 10 includes a column driver 92. The column driver 92 includes a plurality of outputs, C1 and C2, which are coupled to the column address lines 26 and 28 respectively. The column driver is adapted to apply a charging potential to selected ones of the column address lines for providing electric charge to be stored in selected storage elements during the application of the first operating potentials to the row select address line pairs by the row select driver 50. As can be appreciated from a perusal of Figure 3, the row and column select drivers 90 and 92 define a region around the periphery of the display 10′ which does not project an image. This becomes a problem when two or more displays are placed adjacent to one another or "tiled" so as to achieve a single large area display, since this region appears as a grid or seam in the projected images of the two or more displays. This grid or seam is overcome by the use of the diverging/magnifying fibre optic faceplate as is disclosed hereinbelow with respect to Figures 4,5 and 6.

It is preferred that the matrix array of rows and columns of picture elements that combine to make up the improved electronic display 10 of the instant invention utilize a "balanced drive" scheme for addressing each discrete one of the pixels thereof. In this driving scheme, the operating potentials applied to the row select address line pairs are always substantially equal but opposite in polarity. Assuming that the current-voltage characteristics of each of the diodes are substantially equal, a voltage of substantially zero volts will be maintained at the common node 78, at least when the diodes are forward biased. Thus, the voltage applied on the column address line 26 to charge storage element 86 no longer needs to take into account the voltage drop across and/or parasitic charge build-up on one or both of the diodes 74 and 76. Therefore, each pixel in the matrix array of rows and columns may be charged to a known and repeatable value regardless of its position in that matrix array. This permits improved gray scale operation resulting in at least 15 levels of gray scale in large area active matrix displays of the twisted nematic liquid crystal type using normal fluorescent back illumination. The pixels can also be charged more rapidly since the retained charge in the diodes associated with each pixel when they are reverse biased need not be initially dissipated to charge the storage elements. This is because this charge is dissipated when the diodes are first forward biased. A complete description of this driving scheme can be found in U.S. patent No. 4,731,610 issued on March 15, 1988 to Yair Baron et al and entitled Balanced Drive Electronic Matrix System And Method Of Operating The Same, the disclosure of which is incorporated herein by reference.

Referring now to Figure 4, there is illustrated therein a partial cross-sectional side view of a display assembly 410 including three adjacent liquid crystal displays 413a, 413b, and 413c, each of which is substantially identical to the displays illustrated in Figures 2 and 3. Figure 4 further illustrates the operative location of the diverging/magnifying faceplates 426a, 426b and 426c relative to the surface of the liquid crystal display and light sources 412a, 412b and 412c.

In practice, the faceplate is a fibre optic faceplate which is a coherent faceplate of bundled optical fibres wherein each individual fibre has a relatively small numerical apperature, so as to reduce loss of resolution. Since the fibre opic faceplate is not immediately adjacent the liquid crystal pixels, (i.e., it is spaced from the pixel by the width dimension of the second or upper plate of the LCD) large numerical apertured optical fibres cause a significant loss of resolution because they would collect light from many liquid crystal pixels, and thus transmit a less focussed image. Accordingly, a small numerical apertured optical fibre is employed so that light is collected from a single piel only. However, using a small numerical apertured fibre optic results in a small viewing cone, i.e., a narrow viewing angle for the remotely positioned viewer. By this it is meant that the quality of projected image is seriously degraded when viewed at angles other than about ninety degrees to the surface of the faceplate.

Returning to Figure 4, the light sources 412a, 412b and 412c are configured as a single, elongated, serpentined, tubular lamp arranged in a series of elongated parallel lobes. In a second, equally preferred embodiment, the light source may be configured as a plurality of discrete tubular lamps, said lamps defining a given lighting configuration. As can be appreciated from Figure 4, the light sources are disposed immediately behind the liquid crystal displays 413a, 413b and 413c, on the side thereof opposite the diverging/magnifying faceplates.

The display assembly of Figure 4 further includes the individual displays 413a, 413b and 413c arranged in a side-by-side configuration or "tiled". It is to be specifically noted that while only three displays have been illustrated in Figure 4, any number of displays arranged in an x by y matrix may be employed with equal success. Alternatively, even one display can benefit from the application of the instant invention.

It is to be further noted from Figure 4 that each of the displays includes a first plate 414a, 414b, 414c and a second plate 416a, 416b and 416c, between which plates the liquid crystal material is retained. As mentioned in connection with Figure 3, there are regions 418,420,424 and 426 around the periphery of each display upon which the connections to off-board electronics is made. These regions do not project an image, and hence appear as dark seams or grids between adjacent displays. It is to the end of eliminating these dark seams and grids that the diverging/magnifying fibre optic faceplates 426a, 426b and 426c are provided. As said faceplates are diverging/magnifying, images projected from each associated display are enlarged and shifted so as to "hide" the seam/grid regions of each display.

Referring now to Figure 5, there is illustrated therein a blown-up partial cross-sectional side view of the area defined by block 5 of Figure 4. Accordingly, liquid crystal display 413b is illustrated with the associated first plate 414b and 416b. Disposed on plate 414b is a plurality of individual pixels 415, 417 and 419. Liquid crystal material (not shown) is operatively disposed between plates 414b and 416b, and is retained therebetween by means of a seal 421. Affixed to the surface of plate 416b on the side thereof opposite the liquid crystal material is a polarizer 423, which as mentioned hereinabove works cooperatively with the liquid crystal material.

Disposed immediately adjacent to said polarizer 423 is the diverging/magnifying faceplate 426b. As was mentioned hereinabove, the fibre optic faceplate consists of a plurality of coherent bundled optical fibres having a relatively low numerical aperture. As is to be specifically noted from Figure 5, the numerical aperture should be selected so as to allow each optical fibre to "capture" the light projected from a single pixel. However, each optical fibre will not necessarily correspond with a single pixel, but rather, may overlap one or more pixels. Additionally, the small numerical aperture of each optical fibre reduces possible resolution losses.

In order to select the appropriate numerical apreature for the fibre optic faceplate, it is necesary to know a number of parameters, including, pixel size, pixel pitch and the thichness of the plate 416b. Knowing these parameters, it is possible to calculate the numerical aperture. Hence, it is possible to calculate the optimum diameter for each individual optical fibre in any given display.

Turning now to Figure 6, there is illustrated therein a cross-sectional side view of the liquid crystal display and diverging/magnifying fibre optic faceplate of the instant invention, further including a second fibre optic faceplate operatively disposed for increasing the viewing angle of the image projected by the display.

As discussed hereinabove, it is a characteristic of the diverging/magnifying fibre optic faceplate that one cannot readily view a projected image therefrom from any angle other than ninety degrees from the surface of the faceplate. Accordingly, in applications in which the viewer is apt to be positioned at angles other than ninety degrees to the display, it is necessary to provide means for increasing the viewing angle of the projected image.

In Figure 6, there is illustrated two "tiled" displays 610 and 612. Each of said displays are substantially identical to those described hereinabove with respect to Figures 1-5. Disposed immediately adjacent each display 610, 612 is a diverging/magnifying fibre optic faceplate of the type described in detail hereinabove with respect to Figures 4 and 5. As can be appreciated from Figure 6, the faceplates 614, 616 enlarge and shift the images projected by displays 610 and 612 so as to hide the seam/grid regions caused by the peripheral interconnect regions 618, 620 of displays 610 and 612.

In order to increase the viewing angle of the tiled displays 610, 612, a second fibre optic faceplate is disposed immediately adjacent the first faceplates 614, 616. This second faceplate has a large numerical aperture relative to the first faceplates 614, 616. Additionally, the second faceplate is adapted to diffuse and spread the light projected by the first faceplate so as to make it readily visible over a wide range of viewing angles.

While the foregoing paragraphs have described the inventive concept set forth in the this specification, the instant inventors do not intend to have the disclosed invention limited by the detailed embodiments, drawings or description; rather, it is intended that the instant invention should only be limited by the scope of the claims which follow hereinafter.

## Claims

1. A backlit liquid crystal display (410) which includes a source of light (412); and a matrix array of rows and columns of liquid crystal picture elements (413) spacedly disposed from one side of said light source (412); said liquid crystal display (413) being capable of providing an image to a remotely positioned observer; the display comprising:
- an angled, diverging/magnifying fibre optic faceplate (426) operatively disposed adjacent the matrix array of rows and columns of liquid crystal picture elements (413), on the side thereof opposite the light source (412), for shifting the image provided by the matrix array of picture elements, whereby an enlarged, bright, uniform image is projected to said remotely positioned viewer, characterized in that
- each individual fibre of the fibre optic faceplate has a small numeric aperture so as to minimise loss of resolution, and in that
- a second fibre optic faceplate (622) with a high numeric aperture relative to the diverging/magnifying faceplate is disposed thereon so as to increase the angle at which the remotely positioned observer can observe the display.

2. A display as in claim 1, wherein the diverging/magnifing fibre optic faceplate (426) is a plastic faceplate.

3. A display as in claim 1 or 2, wherein said display (413) comprises two or more displays operatively positioned adjacent one another.

4. A display as in claim 3, wherein each of said displays (413) includes an angled diverging/magnifying fibre optic faceplate (426).

5. A display as in claim 4, wherein said faceplates (426) are adapted to shift the image projected by said displays so that the images projected by said displays are immediately adjacent one another.

## Patentansprüche

1. Flüssigkristall-Anzeige (410) mit Hintergrundbeleuchtung, die eine Lichtquelle (412) umfaßt sowie eine Matrixreite von Zeilen und Kolonnen von FlüssigkristallBildelemerten (413), die in einem Abstande von einer Seite der Lichtquelle (412) angeordnet sind, welche Flüssigkristall-Anzeige (413) dazu ausgebildet ist, einem in einer Entfernung befindlichen Beobachter ein Bild zu liefern, welche Anzeige folgendes aufweist:
- eine einen Winkel bildende, divergierend/vergrössernde Frontplatte (426) mit einer Faseroptik, die der Matrixreihe von Zeilen und Kolonnen von Flüssigkristall-Bild-elementen (413) an deren der Lichtquelle (412) gegenüberliegenden Seite betriebsmäßig benachbart angeordnet ist, um das von der Matrixreihe von Bildelementen gelieferte Bild zu verschieben, wodurch ein vergrößertes, helles und gleich-mäßiges Bild zu dem in einer Entfernung befindlichen Betrachter projiziert wird, dadurch gekennzeichnet, daß
- jede einzelne Faser der Frontplatte mit einer Faseroptik zum Minimieren des Verlustes an Auflösung eine numerisch kleine Apertur hat, und daß
- eine zweite Frontplatte (622) mit einer Faseroptik mit einer numerisch hohen Apertur relativ zur divergierend/ vergrößernden Frontplatte daran derart angeordnet ist, daß derjenige Winkel vergrößert wird, unter welchem der in einer Entfernung befindliche Beobachter die Anzeige beobachten kann.

2. Anzeige nach Anspruch 1, bei der die divergierend/ Vergrößernde Frontplatte (426) mit einer Faseroptik eine Kunststoff-Frontplatte ist.

3. Anzeige nach Anspruch 1 oder 2, bei der Anzeige (413) zwei oder mehrere Anzeigen aufweist, die betriebsmäßig einander benachbart angeordnet sind.

4. Anzeige nach Anspruch 3, bei der jede Anzeige (413) eine einen Winkel bildende, divergierend/vergrößernde Frontplatte (426) mit einer Faseroptik aufweist.

5. Anzeige nach Auspruch 4, bei der die Frontplatten (426) dazu ausgebildet sind, das von den Anzeigen projizierte Bild so zu verschieben, daß die von diesen Anzeigen projizierten Bilder einander unmittelbar benachbart sind.

## Revendications

1. Afficheur à cristaux liquides rétro-éclairé (410) qui inclut une source de lumière (412); et un arrangement matriciel de rangées et de colonnes d'éléments d'image à cristaux liquides (413) disposé de manière espacée d'un côté de ladite source de lumière (412); ledit afficheur à cristaux liquides (413) étant capable de fournir une image à un observateur situé au loin; l'afficheur comprenant:
- une plaque frontale (426) à angles divergente/grossissante en fibres optiques disposée de manière opérationnelle contiguë à l'arrangement matriciel de rangées et de colonnes d'éléments d'image à cristaux liquides (413) du côté de celui-ci opposé à la source de lumière (412), pour déplacer l'image fournie par l'arrangement matriciel d'éléments d'image, de manière à ce qu'une image uniforme, brillante et agrandie soit projetée vers le spectateur situé au loin, caractérisé en ce que
- chaque fibre individuelle de la plaque frontale en fibres optiques a une petite ouverture numérique de manière à minimiser la perte de résolution, et en ce que
- une seconde plaque frontale (622) en fibres optiques avec une grande ouverture numérique par rapport à la plaque frontale divergente/grossissante est disposée sur celle-ci de manière à augmenter l'angle auquel l'observateur situé au loin peut observer l'afficheur.

2. Afficheur selon la revendication 1, dans lequel la plaque frontale divergente/grossissante en fibres optiques (426) est une plaque frontale en plastique.

3. Afficheur selon l'une des revendications 1 ou 2, dans lequel ledit afficheur (413) comprend deux afficheurs ou plus situés de manière opérationnelle contigus les uns aux autres.

4. Afficheur selon la revendication 3, dans lequel chacun desdits afficheurs (413) inclut une plaque frontale à angles divergente/grossissante en fibres optiques (426).

5. Afficheur selon la revendication 4, dans lequel lesdites plaques frontales (426) sont adaptées pour déplacer l'image projetée par lesdits afficheurs de manière à ce que les images projetées par lesdits afficheurs soient immédiatement contiguës les unes aux autres.
